# EUROPEAN PATENT SPECIFICATION

(11) **EP 3 514 900 B1**
(45) Date of publication and mention of the grant of the patent: **22.06.2022**
(21) Application number: 19152903.1
(22) Date of filing: 21.01.2019
(51) Int. Cl.: H02G 3/06, H02G 3/08, H02G 3/12, H02G 3/14, H02G 3/32

(54) **JUNCTION BOX**
ANSCHLUSSDOSE
BOÎTIER DE RACCORDEMENT

(30) Priority: 19.01.2018 IT 201800001511
(43) Date of publication of application: 24.07.2019
(73) Proprietor: Vimar S.p.A., 36063 Marostica (VI) (IT)
(72) Inventor: DECATALDO, Cosimo, 36060 Pianezze (VI) (IT); MOCELLIN, Dario, 36061 Bassa del Grappa (VI) (IT)
(74) Representative: Locas, Davide

(56) References cited:
- EP-A2- 1 953 887
- ES-U- 1 062 208
- GB-A- 773 543
- US-B1- 8 053 671

## Description

The present invention relates to a junction box that can be installed on walls for electrical systems, in particular on plasterboard walls.

Within the field of civil engineering and industrial electrical installations, it is known to use suitable box housings, generally defined as junction boxes, which can be fixed to walls and inside of which the electrical cables of the system are received, thereby establishing appropriate connections and junctions.

Typically, the junction boxes are fixed to the wall and comprise a removable cover for allowing access to the inside thereof so as to insert the electrical cables into the relevant corrugated tubes and establish the relative electrical connections. Examples of junction boxes are described in the European patent application EP 1 953 887, in ES 1 062 208 and in the Italian patent application MI2009A000558. However, known solutions of this kind are disadvantageous in terms of the ease of installation and placement accuracy.

In particular, a first disadvantage is linked to the difficulties in holding the box in the correct position, above all in terms of holding said box parallel to the ground, while fixing said box to the wall. This difficulty is also particularly great when installing onto plasterboard as in this case, in fact, the user has to hold the box with one hand and use the screwdriver with the other in order to fix the box by means of screws.

Electrical appliances provided with a handle are disclosed either in GB 773 543 or in US 8 053 671 but the provision of such feature is in no manner helpful during installation of the product.

The technical problem addressed by the present invention is therefore that of providing a junction box that is structurally and functionally designed to overcome one or more of the disadvantages described with reference to the cited prior art. Within the scope of this problem, the main aim of the present invention is to provide a junction box that is simple and practical to install.

A further aim is that of providing a junction box that is easy to hold during the installation phases.

Another aim of the present invention is that of providing a junction box that offers various alternative solutions for fixing said junction box to the wall, in particular in the case of plasterboard walls.

This problem is solved and these aims are achieved by the invention by means of a junction box according to claim 1.

The junction box according to the present invention has a handle that can easily be used, where necessary, to grasp the box during the installation thereof, thereby allowing the box to be held in the appropriate position by means of one hand. At the same time, the presence of two different coupling means allows the handle to be held in a non-cumbersome position when it is not required for installation and to be removed when the box has been fixed.

According to a preferred embodiment, the first coupling means are arranged on the perimeter wall and the second coupling means are arranged on the rear wall, preferably on the side facing the exterior of the housing volume. The second coupling means are preferably arranged in a central region of the rear wall.

These positions are particularly advantageous for obtaining effective mounting and in order to not obstruct the insertion of cables and the wiring thereof when the handle is not in use.

According to the invention, the second coupling means comprise an interlocking device that allows the handle to be removably connected.

The interlocking device preferably comprises a recess formed on the rear wall and an engagement tooth formed on the handle. According to a preferred embodiment, the interlocking device comprises a pair of recesses and a pair of respective engagement teeth, formed on opposite ends of the handle. An embodiment of this kind makes it possible to produce a removable coupling by means of a simple and economic solution that can be easily produced by moulding plastics material into a single manufactured article.

The handle can preferably be resiliently deformed and is designed such that, when it is connected to the second coupling means, the opposite ends are moved apart from one another as a result of a stress in the direction of the rear wall. In so doing, the handle can be coupled and removed in an extremely simple way, still working with a single hand.

In one embodiment, the handle is C-shaped. The engagement teeth are preferably formed on the ends of the C facing inwards.

According to a further aspect, the first coupling means comprise a portion which is designed to break or a pre-fractured portion. The portion which is designed to break is preferably formed on the perimeter wall, preferably on the side facing the exterior of the housing volume. According to this aspect, the position defined by the first coupling means corresponds to the position that the handle occupies once the junction box has been moulded. As a result, the handle is normally in a position in which it does not obstruct the installation of the box when the handle is not required. At the same time, it can be put into use by simply breaking the relative portion.

In one embodiment, the base structure comprises at least one fixing flange which projects, on the perimeter, from the perimeter walls towards the exterior of the base structure, the flange receiving screws for fixing the box to the wall. The fixing flange preferably has a plurality of through holes that can receive a screw in different positions so as to allow the box to be easily fixed onto a plasterboard wall.

According to a further aspect, the perimeter walls comprise removable portions which extend between the rear wall and a perimeter edge that defines an entrance to the housing volume. The perimeter edge preferably comprises a shoulder that is provided with a plurality of through openings.

According to this aspect, cables ties can be used, or other similar elements that pass through the openings, in order to lock the corrugated tube, therefore making installation both simple and precise in the case of plasterboard walls.

According to a preferred embodiment, the shoulder extends from the perimeter edge towards the interior of the base structure. The openings are therefore positioned so as to be easily accessible when the box is fixed to a wall and when the removable portion of the lateral wall has been removed.

The perimeter edge preferably comprises a sheet abutment element to which the removable portions with which the corrugated tube advantageously engages are removably fixed, thus facilitating further the locking of said tube.

According to a preferred embodiment, the removable portions are connected to the rear wall and to the perimeter edge on respective portions which are designed to break. The openings are preferably shaped as elongate slots and extend in a direction perpendicular to the longitudinal extension of the perimeter edge. According to these aspects, the openings directly face the region in which the corrugated tubes are inserted into the housing volume of the box once the removable portion of the perimeter wall has been removed.

In one embodiment, there are two openings for each removable portion, thereby allowing the cable tie to be wound around the corrugated tube by passing through the two openings.

According to a further aspect, the perimeter edge comprises a pair of lightening portions which can be perforated in order to define respective through holes. According to this aspect, the box can also be fixed on its side, in particular when mounting onto plasterboard walls, by perforating the lightening portions by means of screws and thereby fixing said box to an upright of the wall.

The removable portions are connected to the perimeter edge on two portions which are designed to break, each lightening portion being formed between the designed-to-break portions. Each through hole preferably has an axis which is perpendicular to a corresponding portion of the perimeter wall. In one embodiment, the perforatable lightening portions are produced at the shoulder provided with a plurality of through openings, the through openings being perpendicular to the through holes which can be defined by the perforatable lightening portions.

Solutions of this kind permit an optimal comprise between structural sturdiness and ease of mounting.

According to a further aspect, the junction box also comprises a through hole, a contact support, a threaded pin and an elongate locking element which can be screwed onto the threaded pin, and the perimeter wall comprises a guide surface designed such that, while the elongate locking element is being screwed onto the threaded pin, the elongate locking element slides across the guide surface, moving from a position close to the perimeter wall to a position projecting towards the exterior of the perimeter wall.

According to this aspect, the box can also be frontally mounted to the wall. In fact, by removing the flanges, if present, it is possible for the box to be passed through the relevant hole in the wall which is dimensioned so as to allow the box to pass through until the box contacts the contact support. While screwing the threaded pin, the locking element moves into the projecting position in which, while the screwing action continues, the wall can be held between the contact support and the locking element itself.

The guide surface preferably comprises a portion which is transverse with respect to the axis of the through hole and a portion which is parallel with respect to the axis of the through hole. In so doing, in a first screwing phase, the locking element moves from the first position to the second position and, in a second phase, is held in the second position while approaching the contact support.

In one embodiment, the parallel portion is defined by an elongate slot.

According to a preferred embodiment, the locking element comprises a screwing portion provided with a threaded hole, and a locking portion, the screwing portion and the locking portion extending beyond the elongate slot and being separated by a narrowing designed so as to slide inside said elongate slot when the locking element is screwed onto the threaded pin.

The transverse portion preferably forms an angle greater than 90° with the portion parallel to the axis of the through hole.

Features of this kind allow the aforementioned handling action to be implemented in a manner that is simple and can be easily produced by moulding.

The features and further advantages of the invention will become clearer from the following detailed description of a preferred but not exclusive embodiment thereof, shown by way of non-restrictive example and with reference to the accompanying drawings, in which:
- Fig. 1 is a perspective view of the junction box of the present invention which has a handle arranged in a first, manufactured, position;
- Fig. 2 is a perspective view of the junction box of the present invention which has the handle arranged in a second, operating, position;
- Fig. 3 is a perspective view of the junction box from Fig. 2 while being mounted on a wall;
- Fig. 4 is a perspective view of the junction box according to further aspects of the present invention;
- Fig. 5 is a detailed front view of the junction box from Fig. 4 while a corrugated tube is being fixed;
- Fig. 6 is a perspective view of a detail from Fig. 5;
- Fig. 6A is a perspective schematic view of a cross section of the junction box from Fig. 4 while a corrugated tube is being fixed;
- Fig. 7 is a perspective view of the junction box according to further aspects of the present invention;
- Fig. 8 is a perspective view of the junction box from Fig. 7 while being fixed onto an upright of a plasterboard wall;
- Fig. 9 is a partially exploded, perspective view of the junction box according to further aspects of the present invention;
- Fig. 10 to 13 show, by means of respective perspective views, various phases of frontally installing the junction box from Fig. 9 into a plasterboard wall;
- Fig. 14 is a perspective view of the junction box according to further aspects of the present invention.

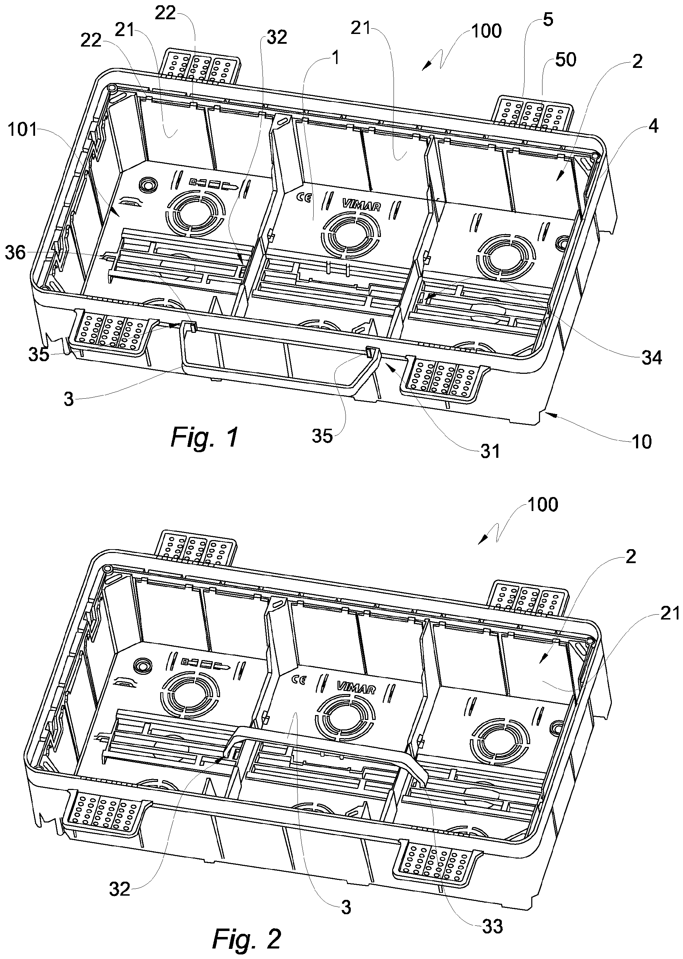

With initial reference to Fig. 1, a junction box according to the present invention is denoted as a whole by the reference numeral 100.

The junction box 100 has a housing volume 101 into which the electrical cables are inserted in order to produce the wiring of the electrical system and inside which the relative connections between different ends of the electrical cables are established.

The housing volume 101 is defined as a whole by a base structure 10 which preferably comprises a rear wall 1 and perimeter walls 2.

According to preferred embodiments, the base structure has a substantially parallelepiped shape having an upper face that can be opened and closed by means of a relevant cover, which is not shown in the drawings.

The cover can be fixed to the base structure 10 in a manner that is known per se, specifically by means of screws which engage with relative internal threads formed on the base structure.

According to a preferred embodiment, the junction box can be fixed to the wall by means of suitable fixing flanges 5 which project, on the perimeter, from the perimeter walls 2 towards the exterior of the base structure 10.

The fixing flanges 5 preferably have a plurality of through holes 50 that receive a screw in different positions, thereby locking the box in the appropriate position on the plasterboard wall.

Different fixing means can of course also be provided, in particular when the junction box is intended for other types of walls.

According to a first aspect of the invention, the junction box 100 also comprises a handle 3 which can be removably fixed to the base structure 10 by means of first and second coupling means 31, 32.

The two coupling means are positioned so as to fix the handle in two different positions, which are also defined as a manufactured position and operating position. Specifically, with initial reference to Fig. 1, the first coupling means 31 are designed to removably hold the handle 3 on a peripheral portion of the base structure 10.

In this first position, the handle 3 does not impair the mounting of the box and does not occupy the housing volume 101. This positioning is preferably obtained by providing the first coupling means 31 on the perimeter wall 2.

According to a preferred embodiment, in order to make the handle available only when required but, at the same time, make it a component that can always be accessed by the installer, the first coupling means 31 are defined by a portion 36 which is designed to break, also referred to as a pre-fractured region, which can be broken by separating the handle from the base structure when required. The pre-fractured region can be produced, for example, by means of a lightening portion or a partial notch formed in the portion which joins the handle 3 to the relevant peripheral portion of the base structure 10. The portion which is designed to break is preferably formed on the perimeter wall 2, on the side facing the exterior of the housing volume 101.

The designed-to-break portion 36 can advantageously be directly produced while the junction box of the present invention is being moulded and, for this reason, the first position of the handle 3 is also referred to as a manufactured position. However, as illustrated in Fig. 2, when the handle 3 is in the other position, which is the operating position, it is arranged in a central portion of the base structure. For this purpose, the second coupling means 32 are arranged on the rear wall 1 of the base structure, preferably on the side facing the exterior of the housing volume 101.

As described above, the present invention allows the handle 3 to only be made available when necessary and, again for this purpose, the handle can advantageously be coupled onto the second coupling means by means of an interlocking device 33 that allows the handle 3 to be removably connected.

It is therefore noted that, in this position, the user can easily hold the box with one hand, by grasping the handle, therefore keeping the other hand free for using a screwdriver and fixing the box to the wall. This second position is therefore also referred to as an operating position.

As shown in Fig. 2, in one embodiment the interlocking device 33 comprises a pair of recesses 34 and a pair of respective engagement teeth 35, formed on opposite ends of the handle 3.

The handle 3 can preferably be resiliently deformed and is designed such that, when it is connected to the second coupling means 32, the opposite ends are moved apart from one another as a result of a stress in the direction of the rear wall 1, thereby allowing the engagement teeth 35 to be inserted into and removed from the relevant recesses 34.

In order to make the handle more easily deformable as described above, the handle 3 can be C-shaped. In this case, the engagement teeth 35 can be formed on the ends of the C facing inwards such that, when the handle 3 is locked on the recesses, pressing said handle towards the rear wall makes the teeth 35 move away from one another, therefore making said teeth come out of the relative recesses. Furthermore, this design also makes it possible to ensure that a movement of the handle away from the wall stresses the teeth 35 towards the interior of the recesses 34, therefore making the connection of the handle more stable.

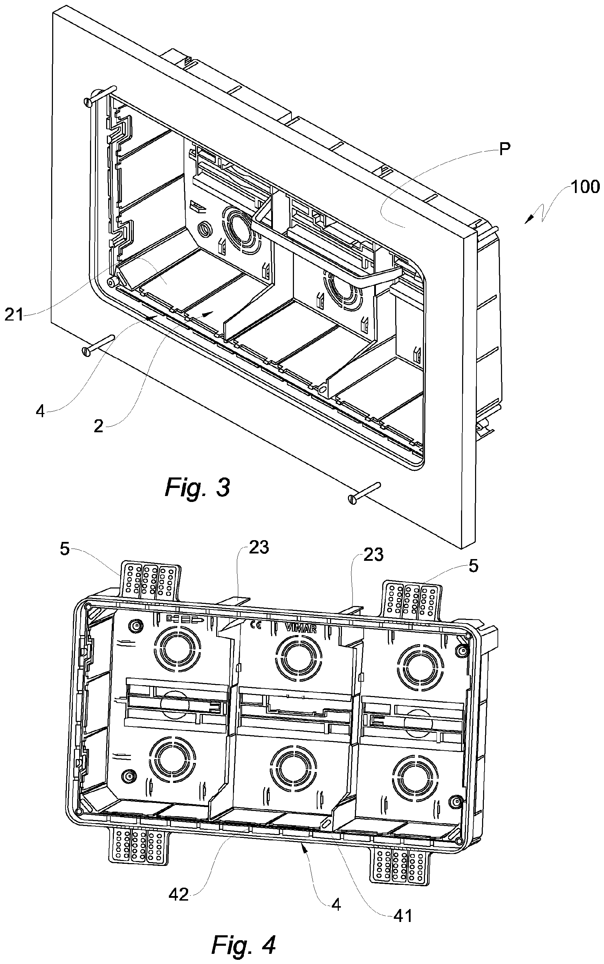

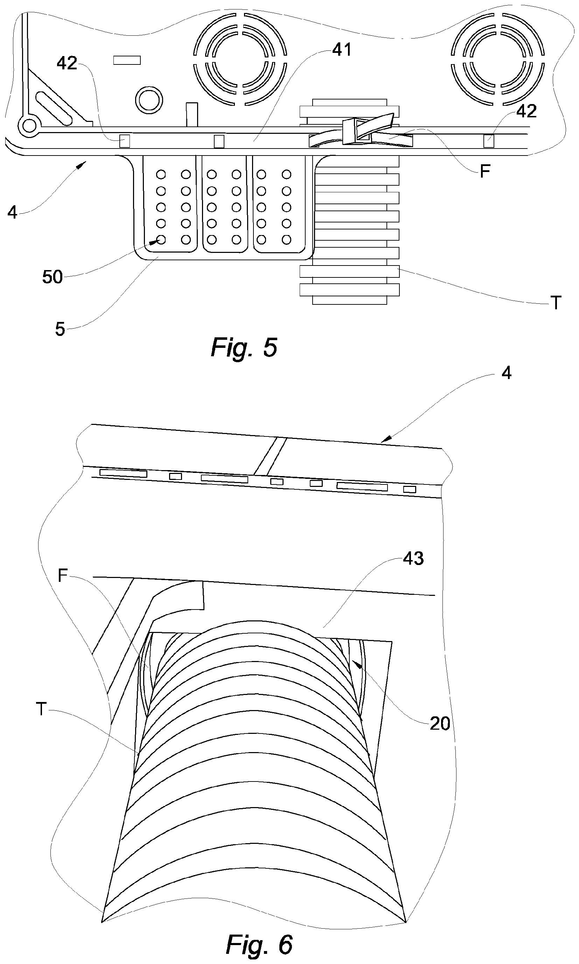

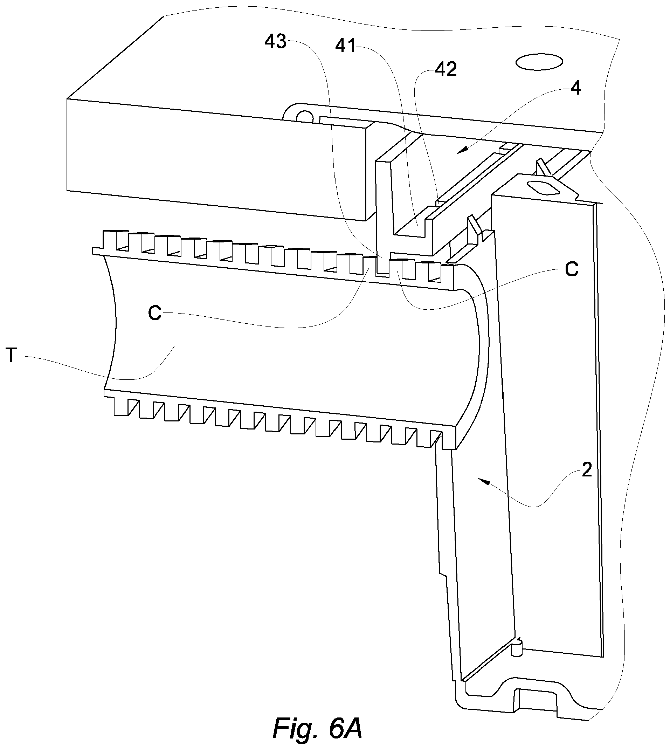

Now with reference to Fig. 4 to 6, according to a further aspect of the invention, the corrugated tube T of the civil engineering installation is partially inserted into the junction box 100 by means of removing one or more removable portions 21 which are part of the perimeter walls 2. In fact, removing one of the removable portions 21 allows a corresponding passage 20 to be defined, which is partially visible in Fig. 6, which passage is designed so as to allow the corrugated tube T to enter inside the housing volume of the junction box 100. It is noted that, in Fig. 6A, the corrugated tube T is shown as passing through the removable portion 21, and therefore the passage 20 cannot be seen in this figure for greater illustrative clarity. According to a preferred embodiment, the removable portions 21 are connected to the rear wall 1 and to the perimeter edge 4 on respective portions 22 which are designed to break.

In some embodiments, the perimeter edge 4 defines an entrance to the housing volume. In so doing, the perimeter edge 4 can guarantee sufficient structural sturdiness, as well as define a contact for the cover, even when one or more removable portions 21 are removed.

In order to allow the tube T to be stably locked, the perimeter edge 4 comprises a shoulder 41 provided with a plurality of through openings 42 through which a cable tie F or other similar locking element can be passed in order to hold the tube.

According to a preferred embodiment, the shoulder 41 extends from the perimeter edge 4 towards the interior of the base structure 10.

The perimeter edge 4 preferably comprises a sheet abutment element 43. In one embodiment, the sheet element 43 is fixed to the edge 4 at an external end thereof, opposite to the shoulder 41 at the end to which the removable portions 21 are removably fixed.

The sheet abutment element 43 can be inserted between two successive enlarged portions or ridges C of the corrugated tube so as to prevent the corrugated tube from sliding out of the passage defined after the removable portion 21 has been removed.

In a preferred embodiment, the openings 42 are shaped as elongate slots and extend in a direction perpendicular to the longitudinal extension of the perimeter edge 2 in order to facilitate inserting the cable tie F.

There are preferably two openings 42 for each removable portion 21 such that the cable tie can be inserted into a first opening, passed around the tube and inserted into the other opening, thereby encircling the corrugated tube T. It is noted that this design also allows the tube to be held against the sheet 43 as described above.

In addition or alternatively to the system for fixing the corrugated tubes described above, according to a further aspect of the invention an auxiliary support element (not shown in the drawings) for the corrugated tubes can be used which can be joined to the junction box of the present invention by means of guides 23 made in the perimeter wall 2, on the external side thereof.

According to a preferred embodiment, the auxiliary support element can be formed by a base surface, designed so as to be inserted between the aforementioned guides 23, from which surface a plurality of sleeves extend which can receive the corrugated tubes so as to hold them.

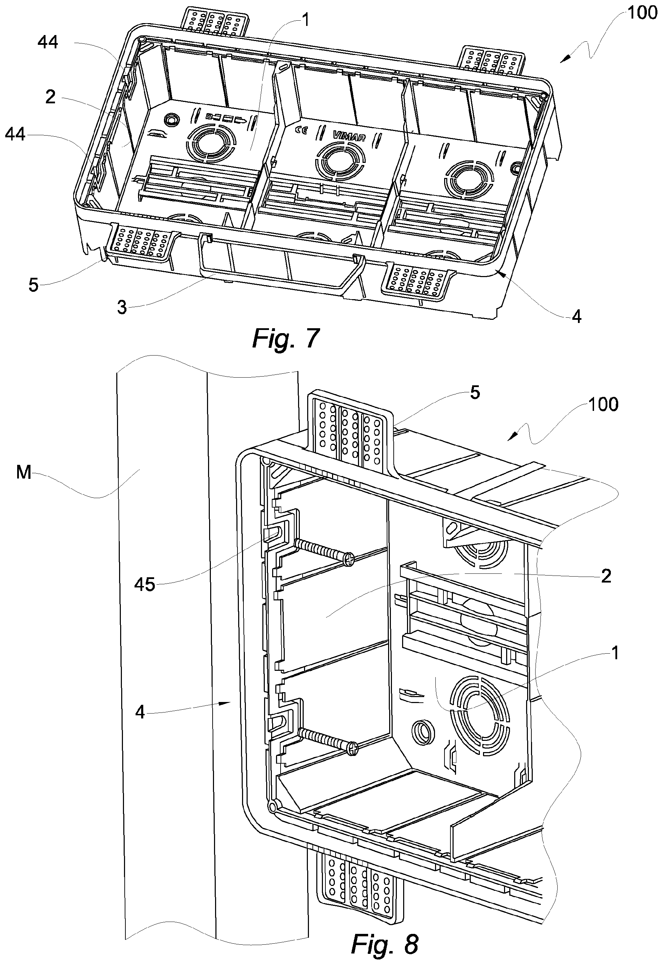

Now with reference to Fig. 7 and 8, according to another aspect, the junction box 100 can also be fixed to the uprights M of the plasterboard wall P. For this purpose, the perimeter edge 4 can comprise a pair of perforatable lightening portions 44 which can be perforated in order to define respective through holes 45. Each through hole 45 has an axis which is perpendicular to the corresponding portion of the perimeter wall 2, in other words, the portion which therefore faces the upright M when the box has to be laterally mounted.

During installation, the lightening portion can be removed or punctured by using a screwdriver on the lightening portions or directly screwing a screw, for example, thereby allowing the box to be fixed onto the upright M by means of screws. According to a preferred embodiment, each lightening portion 44 is positioned between two designed-to-break portions 22 of the removable portions 21.

The perforatable lightening portions 44 are preferably produced at the shoulder 41 provided with a plurality of through openings 42, the through openings being perpendicular to the through holes 45 which can be defined by the perforatable lightening portions 44.

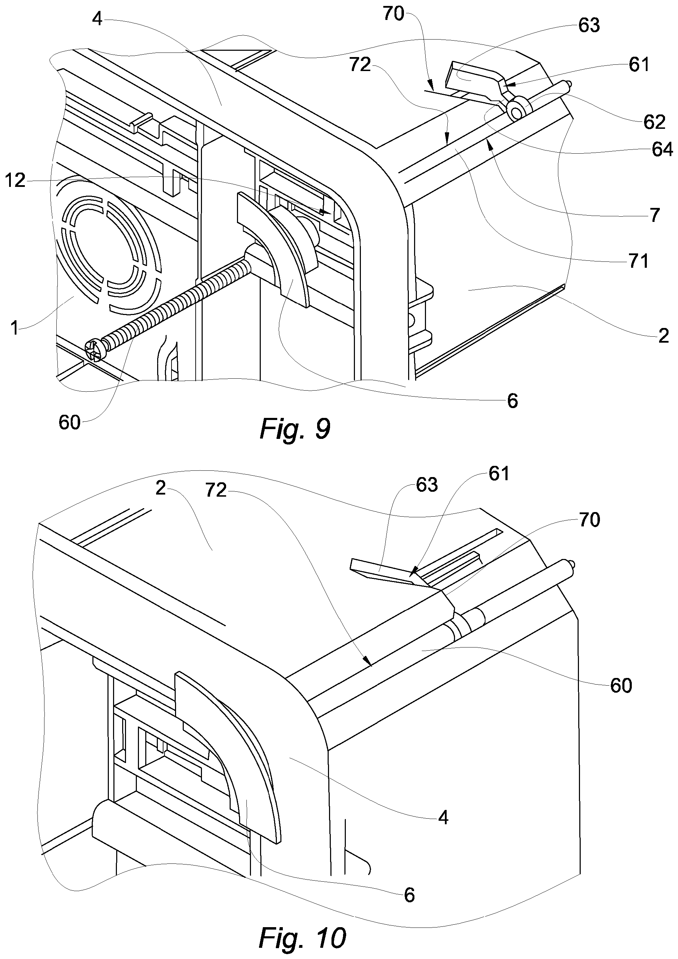

Now with reference to Fig. 9 to 13, according to a further aspect the junction box of the present invention advantageously allows installation from the wall side, i.e. frontal installation.

For this purpose, the flanges 5 can be removed, preferably by acting on respective regions that are designed to break, for example defined by pre-fractures or lightening portions formed in the region thereof that joins to the perimeter edge 4. It is noted that, once the flanges 5 have been removed, it is possible to insert the junction box frontally into the relevant hole on the wall.

In preferred embodiments, the junction box also comprises, preferably as additional fittings, a contact support 6, a screw or a threaded pin 60 and an elongate locking element 61 which can be screwed onto the threaded pin 60.

The base structure 10 is preferably provided with a through hole 12 in which the threaded pin 60 can be housed, which threaded pin can thus join, from opposite sides of the hole 12, the contact support 6 and the locking element 61.

In some embodiments, the threaded pin 60 has an end comprising a groove (not shown in the drawings) in which it is possible to house a resilient element such as a snap ring or a spring washer in order to prevent the locking element 61 from sliding out when it is being completely unscrewed.

The contact support 6 is designed such that it can rest against the corners of the perimeter edge 4 such that a relative extension projects towards the exterior from said perimeter edge. Therefore, when the box is inserted into the opening made in the wall P for its installation, the extension contacts the wall, thereby resting on said wall.

The locking element can also be moved between two different operating positions. In a first position, the locking element 61 is in a position close to the perimeter wall 2, therefore allowing it to remain substantially inside the perimeter dimensions defined by the edge 4 and, therefore, enabling insertion into the opening in the wall O. This design is shown in Fig. 10, for example.

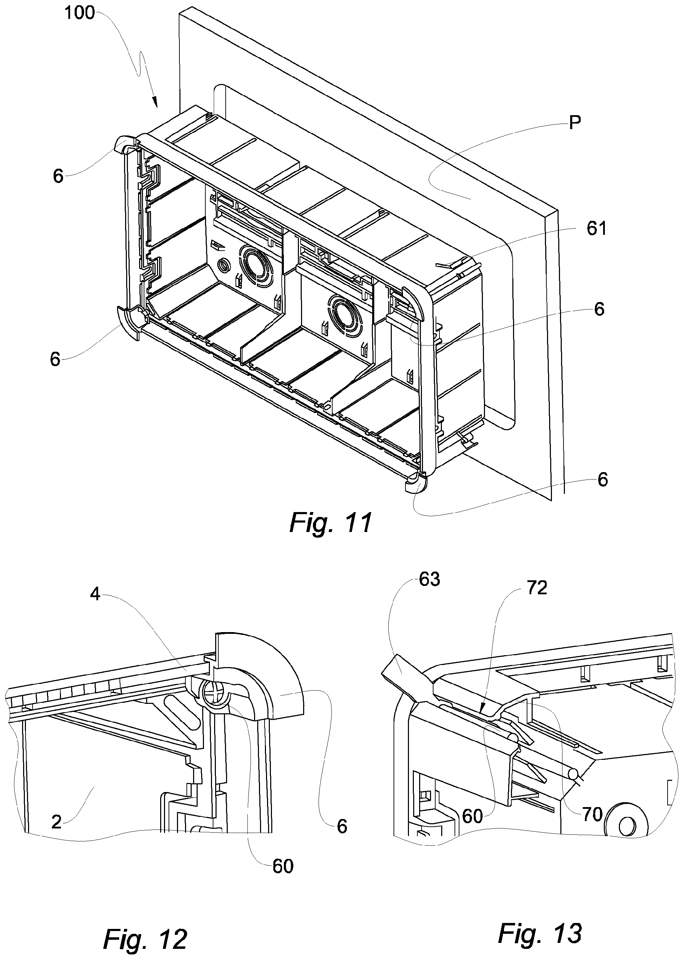

In the second position, however, the element 61 is in a position which projects towards the exterior of the perimeter wall 2 and prevents passage through the aforementioned opening, as shown in Fig. 13.

In order to produce the passage between the first and the second position, the base structure 10 comprises a guide surface 7, preferably defined on the perimeter wall 2, which guide surface is designed such that, while the elongate locking element 61 is being screwed onto the threaded pin 60, the elongate locking element 61 slides across the guide surface 7, moving from the position close to the perimeter wall 2 to a position projecting towards the exterior of the perimeter wall 2.

This effect is preferably achieved by providing a transverse portion 70 in the guide surface 7, which portion is therefore arranged transversely with respect to the axis of the through hole, and a parallel portion 71, which is instead arranged in parallel with the axis of the through hole.

In one embodiment, the parallel portion 71 is defined by an elongate slot 72.

According to a preferred embodiment, in order to establish appropriate coupling to the aforementioned portions and in particular to the slot 72, the locking element 61 comprises a screwing portion 62 provided with a threaded hole, and a locking portion 63 which is preferably curved.

The screwing portion and the locking portion extend beyond the elongate slot 72 and are separated by a narrowing 64 which can therefore slide inside said elongate slot 72 when the locking element is screwed onto the threaded pin.

Again in order to appropriately guide the locking element 61, according to a preferred embodiment the transverse portion 70 preferably forms an angle greater than 90° with the portion parallel to the axis of the through hole 12.

When the pin is being screwed, for example using a screwdriver on the head that can be accessed from the exterior, the locking element 61 tends to approach the contact support 6. In a first phase, the locking element 61 tends to slide onto the transverse portion, also rotating until it reaches the extended position.

When it has reached the slot, however, the element 61 continues its motion approaching the support 6 by sliding linearly, therefore without further rotations.

The invention thus solves the problem posed while simultaneously providing several advantages. In particular, the junction box according to the present invention allows simple installation and can be easily adapted to different requirements of the operator. Moreover, the presence of the shoulder provided with a plurality of through openings makes it possible to hold the corrugated tubes in the box in a simple manner, in particular in the case of plasterboard walls in which the tubes are not locked by means of mortar or other cement mixtures. Furthermore, it is also possible to frontally install the box, as an alternative to installing from the rear part of the wall.

## Claims

1. Junction box (100) comprising a base structure (10) that defines a housing volume (101) for electrical cables and other components, said base structure comprising a rear wall (1) and perimeter walls (2), and further comprising a handle (3) which is removably connected to the base structure (10) and first coupling means (31) and second coupling means (32) for coupling of the handle (3) to the base structure (10), wherein the first and second coupling means (31, 32) are positioned so as to removably fix the handle (3) to the base structure (10) in two different positions, and in that the first coupling means (31) and the second coupling means (32) are designed so as to hold the handle (3) in an amovable manner each in one of the two different positions, one position being on a central portion of the base structure (10) in which the user can hold the junction box (100) by grasping the handle (3) and a second position being on a peripheral portion of the same, in which the handle (3) does not occupy the housing volume (101), the second coupling means (32) comprising an interlocking device (33) that allows the handle (3) to be removably connected and being designed such that the handle (3), when coupled to said second coupling means (32), extends from said rear wall (1) towards said housing volume (101).

2. Junction box (100) according to claim 1, wherein the first coupling means (31) are arranged on the perimeter wall (2) and the second coupling means (32) are arranged on the rear wall (1).

3. Junction box (100) according to claim 2, and the first coupling means (31) are arranged on the side facing the exterior of the housing volume (101).

4. Junction box (100) according to any of the preceding claims, wherein the interlocking device (33) comprises a recess (34) formed on the rear wall (1) and an engagement tooth (35) formed on the handle (3).

5. Junction box (100) according to claim 4, wherein the interlocking device comprises a pair of recesses (34) and a pair of respective engagement teeth (35), formed on opposite ends of the handle.

6. Junction box (100) according to any one of the preceding claims, wherein the handle (3) can be resiliently deformed and is designed such that, when it is connected to the second coupling means (32), the opposite ends are moved apart from one another as a result of a stress in the direction of the rear wall (1).

7. Junction box (100) according to claim 6, wherein the handle (3) is C-shaped.

8. Junction box (100) according to claims 5 and 7, wherein the engagement teeth (35) are formed on the ends of the C facing inwards.

9. Junction box (100) according to any one of the preceding claims, wherein the first coupling means (31) comprise a lightening portion, or a partial notch, formed in the portion which joins the handle (3) to the relevant peripheral portion of the base structure (10) forming a portion which is designed to break (36).

10. Junction box (100) according to any one of the preceding claims, in which box an entrance is defined which is formed in a face of the junction box (100) that is opposite said rear wall (1) and which allows access to said housing volume (101).

11. Junction box (100) according to claim 10, wherein said entrance is defined by a perimeter edge (4) that overlaps said perimeter walls (2), said entrance extending up to said perimeter edge (4) so as to extend over a surface area that is substantially equal to that of the housing volume (101).

12. Junction box (100) according to any one of claims 2 to 11, wherein the second coupling means (32) are arranged in a central region of the rear wall (1).

## Patentansprüche

1. Anschlussbox (100) mit einer Basisstruktur (10), die ein Gehäusevolumen (101) für elektrische Kabel und andere Komponenten bildet, wobei die Basisstruktur eine Rückwand (1) und Umfangswände (2) aufweist und ferner einen Griff (3), der lösbar mit der Basisstruktur (10) verbunden ist, und erste Verbindungsmittel (31) und zweite Verbindungsmittel (32) zum Verbinden des Handgriffs (3) mit der Basisstruktur (10) aufweist, wobei die ersten und zweiten Verbindungsmittel (31, 32) positioniert sind, um den Griff (3) lösbar an der Basisstruktur (10) an zwei verschiedenen Positionen zu befestigen, und dass die ersten Verbindungsmittel (31) und zweiten Verbindungsmittel (32) ausgelegt sind, um den Handgriff (3) jeweils in einer der zwei unterschiedlichen Positionen beweglich zu halten, wobei sich eine Position auf einem zentralen Abschnitt der Basisstruktur (10) befindet, in der der Benutzer die Anschlussbox (100) halten kann, indem er den Griff (3) ergreift, und eine zweite Position sich auf einem peripheren Abschnitt derselben befindet, bei der der Griff (3) das Gehäusevolumen (101) nicht einnimmt, wobei das zweite Verbindungsmittel (32) eine Verriegelungsvorrichtung (33) aufweist, die eine lösbare Verbindung des Griffs (3) ermöglicht, und so gestaltet ist, dass sich der Griff (3) von der Rückwand (1) in Richtung des Gehäusevolumens (101) erstreckt, wenn er mit dem zweiten Verbindungsmittel (32) verbunden ist.

2. Anschlussbox (100) nach Anspruch 1, wobei die ersten Verbindungsmittel (31) an der Umfangswand (2) und die zweiten Verbindungsmittel (32) an der Rückwand (1) angeordnet sind.

3. Anschlussbox (100) nach Anspruch 2, wobei die ersten Verbindungsmittel (31) auf der dem Äußeren des Gehäusevolumens (101) zugewandten Seite angeordnet sind.

4. Anschlussbox (100) nach einem der vorhergehenden Ansprüche, wobei die Verriegelungsvorrichtung (33) eine an der Rückwand (1) ausgebildete Aussparung (34) und einen am Griff (3) ausgebildeten Eingriffszahn (35) aufweist.

5. Anschlussbox (100) nach Anspruch 4, wobei die Verriegelungsvorrichtung ein Paar Aussparungen (34) und ein Paar jeweiliger Eingriffszähne (35) aufweist, die an gegenüberliegenden Enden des Griffs ausgebildet sind.

6. Anschlussbox (100) nach einem der vorhergehenden Ansprüche, wobei der Griff (3) elastisch verformt werden kann und ausgebildet ist, so dass die gegenüberliegenden Enden durch eine Belastung in Richtung der Rückwand (1) auseinander bewegt werden, wenn er mit dem zweiten Verbindungsmittel (32) verbunden ist.

7. Anschlussbox (100) nach Anspruch 6, wobei der Griff (3) C-förmig ist.

8. Anschlussbox (100) nach Anspruch 5 und 7, wobei die Eingriffszähne (35) an den nach innen weisenden Enden des C ausgebildet sind.

9. Anschlussbox (100) nach einem der vorhergehenden Ansprüche, wobei die ersten Verbindungsmittel (31) einen Erleichterungsabschnitt oder eine Teilkerbe aufweisen, die in dem Abschnitt ausgebildet sind, die den Griff (3) mit dem relevanten Umfangsabschnitt der Basisstruktur (10) verbindet, die einen Abschnitt bildet, der dazu bestimmt ist, zu brechen (36).

10. Anschlussbox (100) nach einem der vorhergehenden Ansprüche, bei der ein Eingang ausgebildet ist, der in einer der Rückwand (1) gegenüberliegenden Fläche der Anschlussbox (100) ausgebildet ist und einen Zugang zum Gehäusevolumen (101) ermöglicht.

11. Anschlussbox (100) nach Anspruch 10, wobei der Eingang durch eine Umfangskante (4) ausgebildet ist, die die Umfangswände (2) überlappt, wobei sich der Eingang bis zur Umfangskante (4) erstreckt, um sich über einen Oberflächenbereich zu erstrecken, der im Wesentlichen gleich dem des Gehäusevolumens (101) ist.

12. Anschlussbox (100) nach einem der Ansprüche 2 bis 11, wobei die zweiten Verbindungsmittel (32) in einem mittleren Bereich der Rückwand (1) angeordnet sind.

## Revendications

1. Boîtier de raccordement (100) comprenant une structure de base (10) qui définit un volume de logement (101) pour des câbles électriques et d'autres composants, ladite structure de base comprenant une paroi arrière (1) et des parois périmétriques (2), et comprenant en outre une poignée (3) qui est reliée de manière amovible à la structure de base (10) et des premiers moyens de couplage (31) et des seconds moyens de couplage (32) pour coupler la poignée (3) à la structure de base (10), dans lequel les premiers et seconds moyens de couplage (31, 32) sont positionnés de manière à fixer de manière amovible la poignée (3) à la structure de base (10) dans deux positions différentes, et en ce que les premiers moyens de couplage (31) et les seconds moyens de couplage (32) sont conçus de manière à maintenir la poignée (3) de manière amovible chacun dans l'une des deux positions différentes, une position étant sur une partie centrale de la structure de base (10) dans laquelle l'utilisateur peut tenir le boîtier de raccordement (100) en saisissant la poignée (3) et une seconde position étant sur une partie périphérique de celle-ci, dans laquelle la poignée (3) n'occupe pas le volume de logement (101), les seconds moyens de couplage (32) comprenant un dispositif d'enclenchement (33) qui permet à la poignée (3) d'être reliée de manière amovible et étant conçu de sorte que la poignée (3), lorsqu'elle est couplée auxdits seconds moyens de couplage (32), s'étende depuis ladite paroi arrière (1) vers ledit volume de logement (101).

2. Boîtier de raccordement (100) selon la revendication 1, dans lequel les premiers moyens de couplage (31) sont agencés sur la paroi périmétrique (2) et les seconds moyens de couplage (32) sont agencés sur la paroi arrière (1).

3. Boîtier de raccordement (100) selon la revendication 2, et les premiers moyens de couplage (31) sont agencés du côté tourné vers l'extérieur du volume de logement (101).

4. Boîtier de raccordement (100) selon l'une quelconque des revendications précédentes, dans lequel le dispositif d'enclenchement (33) comprend un évidement (34) formé sur la paroi arrière (1) et une dent d'engagement (35) formée sur la poignée (3).

5. Boîtier de raccordement (100) selon la revendication 4, dans lequel le dispositif d'enclenchement comprend une paire d'évidements (34) et une paire de dents d'engagement respectives (35), formées sur des extrémités opposées de la poignée.

6. Boîtier de raccordement (100) selon l'une quelconque des revendications précédentes, dans lequel la poignée (3) peut être déformée élastiquement et est conçue de sorte que, lorsqu'elle est reliée aux seconds moyens de couplage (32), les extrémités opposées soient écartées l'une de l'autre en raison d'une contrainte dans la direction de la paroi arrière (1).

7. Boîtier de raccordement (100) selon la revendication 6, dans lequel la poignée (3) est en forme de C.

8. Boîtier de jonction (100) selon les revendications 5 et 7, dans lequel les dents d'engagement (35) sont formées sur les extrémités du C tournées vers l'intérieur.

9. Boîtier de raccordement (100) selon l'une quelconque des revendications précédentes, dans lequel les premiers moyens de couplage (31) comprennent une partie d'allégement, ou une encoche partielle, formée dans la partie qui attache la poignée (3) à la partie périphérique concernée de la structure de base (10) formant une partie qui est conçue pour se rompre (36).

10. Boîtier de raccordement (100) selon l'une quelconque des revendications précédentes, dans lequel boîtier une entrée est définie qui est formée dans une face du boîtier de raccordement (100) qui est opposée à ladite paroi arrière (1) et qui permet l'accès audit volume de logement (101).

11. Boîtier de raccordement (100) selon la revendication 10, dans lequel ladite entrée est définie par un bord périmétrique (4) qui se chevauche avec lesdites parois périmétriques (2), ladite entrée s'étendant jusqu'audit bord périmétrique (4) de manière à s'étendre sur une superficie qui est sensiblement égale à celle du volume de logement (101).

12. Boîtier de raccordement (100) selon l'une quelconque des revendications 2 à 11, dans lequel les seconds moyens de couplage (32) sont agencés dans une région centrale de la paroi arrière (1).
